(19) Europäisches Patentamt / European Patent Office / Office européen des brevets

(11) **EP 2 608 435 A1**

(12) **EUROPEAN PATENT APPLICATION**

(43) Date of publication:
**26.06.2013 Bulletin 2013/26**

(21) Application number: **11306704.5**

(22) Date of filing: **20.12.2011**

(51) Int Cl.:
*H04J 14/02* (2006.01)     *G02B 6/293* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventor: **Pfeiffer, Thomas
70569 Stuttgart (DE)**

(74) Representative: **Mildner, Volker
Alcatel-Lucent Deutschland AG
Intellectual Property & Standards
Lorenzstrasse 10
70435 Stuttgart (DE)**

(54) **Wavelength Division Multiplex Receiver for an Optical Access Network**

(57)     Disclosed is a customer sided termination unit for an optical access network, which comprises an optical interface adapted to receive a downstream signal having a wavelength $\lambda_1$, an optical receiver, a first and a second distributed Bragg reflector, essentially reflecting a signal at said wavelength, and a symmetric optical coupler with at least two first ports at a first side and at least two second ports at a second side. The effective optical distance between an effective reflection plane of the first distributed Bragg reflector and the symmetric optical coupler and an effective optical distance between an effective reflection plane of the second distributed Bragg reflector and the symmetric optical coupler are chosen such, that a difference between said effective optical distance is chosen as an integer multiple of the wavelength.

**Fig. 5**

EP 2 608 435 A1

## Description

### Field of the Invention

The invention relates to a Wavelength Division Multiplex (WDM) Receiver for an Optical Access Network.

### Background

It is known to provide to one or more subscribers a network connection to a telecommunications core network by means of an optical telecommunications access network. An example of such access networks is known as a passive optical networks (PON). The subscribers are preferably called customers or users.

An interconnection between the access network and the core or metro network is given at a so called central office. This interconnection is provided by a network sided access network termination unit. Such a network sided access network termination unit is preferably called optical line terminal (OLT).

Customers may connect their data transmission devices to customer sided access network termination units, located at or close to the customer's premises. Such customer sided access network termination units are preferably called optical network units (ONU). The customer sided access network termination units may alternatively be called Optical Network Terminals (ONT).

Optical data transmission connections between the OLT and the ONUs are provided within the optical access network such, that the OLT is connected via an optical fibre, preferably called optical feeder fibre, to a remote node located outside of and in distance to the central office. In optical access networks relying on the technique of Wavelength Division Multiplex (WDM), the OLT transmits multiple optical data signals with respective differing wavelengths into the optical feeder fibre in the downstream direction. These optical data signals with respective differing wavelengths may be called optical WDM signals. A specific one of these optical WDM signals may carry data that is assigned to one or more specific ONUs; in other words, specific optical WDM signals with specific wavelengths are assigned to specific ONUs. For carrying data assigned to a group of multiple ONUs, the respective optical WDM signal may be an optical time division multiplex (TDM) signal, which carries data for an ONU of such a group within a specific respective time frame.

The optical data signals are split at the remote node onto optical transmission branches, wherein either one ONU or a group of ONUs is connected to one of these optical branches.

A first option for splitting the optical WDM signals at the remote node is wavelength dependent splitting, wherein the optical WDM signals are split such, that a specific optical WDM signal of a specific wavelength is split onto the optical branch of those ONUs to which the specific optical WDM signal is assigned. This wavelength dependent splitting may be carried out at the remote node by means of a wavelength dependent multiplexer, preferably in the form of an Arrayed Waveguide Grating (AWG). By this method of signal splitting, it is achieved that an ONU receives only that optical WDM signal of that wavelength, which it is supposed to receive for the purpose of data transmission. Therefore, in this method of signal splitting, the ONU does not have to filter out other optical WDM signals of other wavelengths, that are not supposed to reach this specific ONU, before providing received signals to a receiving unit of the ONU such as for example a photo diode. Filtering out the other optical WDM signals of the other wavelengths is especially important for example in the case, that data is transmitted via an optical WDM signal using the method of On- and Off-Keying, as a form of Amplitude-Shift Keying, when using a simple power-detector as a receiving unit. This power-detector may otherwise be disturbed by power of the other optical WDM signals. Also for coherent detection schemes it is of advantage to filter out undesired wavelengths. The wavelength dependent filtering is carried out in this method of splitting by the wavelength dependent multiplexer located at the remote node.

A second option for splitting the optical WDM signals is pure power splitting carried out at the remote node. The remote node splits the power of all different optical WDM signals onto all optical branches, which results in a transmission of all optical WDM signals towards all ONUs connected to the optical branches. In this case, a single ONU receives all optical WDM signals, and therefore needs to filter out itself other optical WDM signals of other wavelengths, that are not supposed to reach this specific ONU, itself, before providing received signals to a receiving unit of the ONU such as a photo diode. The wavelength dependent filtering has to be carried out in this method of splitting by the ONUs themselves.

It is an objective to provide a customer sided access network termination unit, in other words an ONU or an ONT, that is operable to filter out specific received optical WDM signals and to provide a certain desired received optical WDM signal to an optical receiving unit.

### Summary

What is proposed, is a customer sided termination unit for an optical access network, which comprises

- an optical interface adapted to receive a downstream signal having a wavelength,
- an optical receiver,
- a first and a second distributed Bragg reflector, essentially reflecting a signal at the mentioned wavelength, and
- a symmetric optical coupler with at least two first ports at a first side and at least two second ports at a second side.

The optical interface is connected to one of the first ports. The optical receiver is connected to the other of the first ports. The distributed Bragg reflectors are connected to respective ones of the second ports.

An effective optical distance between an effective reflection plane of the first distributed Bragg reflector and a reference axis of the symmetric optical coupler is chosen. Furthermore, an effective optical distance between an effective reflection plane of the second distributed Bragg reflector and a reference axis of the symmetric optical coupler is chosen. These effective optical distances are chosen such, that a difference between them is an integer numbered multiple of the mentioned wavelength. Preferably, these effective optical distances are chosen as equal optical distances.

The proposed solution may have the below mentioned advantages.

The proposed customer sided termination unit itself is able to filter out a specific wavelength. Therefore, filtering of wavelengths does not have to be provided at a remote node of the optical access network. Thus, the remote node may perform simple power splitting for downstream signals.

Due to the choice of the effective optical distances, the received optical signal is present at the receiver with a maximized intensity.

Furthermore, a transmission of the received optical signal back into the network is essentially suppressed. Thus, no isolating unit is needed for keeping the received optical signal from being transmitted back into the network.

In the case, that the effective optical distances are chosen such, that a difference between them is an integer numbered multiple of the mentioned wavelength, the tuning of the customer sided termination unit to the mentioned wavelength depends on this difference of these effective optical distances as well as the property of the Bragg reflectors to essentially reflect a signal at this wavelength.

In the case, that the effective optical distances are chosen to be equal, the tuning of the customer sided termination unit to the mentioned wavelength depends not on the actual equal values of these effective optical distances but on the property of the Bragg reflectors to essentially reflect a signal at this wavelength.

**Brief description of the Figures**

Figure 1 shows an optical access network.

Figure 2a shows a first solution of an optical network terminal for filtering out undesired signals with respective wavelengths according to the prior art.

Figure 2b shows a reflection profile of a distributed Bragg reflector.

Figure 3 shows a second solution of an optical network terminal for filtering undesired signals with respective wavelengths according to the prior art.

Figure 4 shows a proposed optical network terminal according to an embodiment.

Figure 5 shows a further embodiment of the proposed optical network terminal.

Figure 6 shows an even further embodiment of a proposed optical network terminal.

**Description of Embodiments**

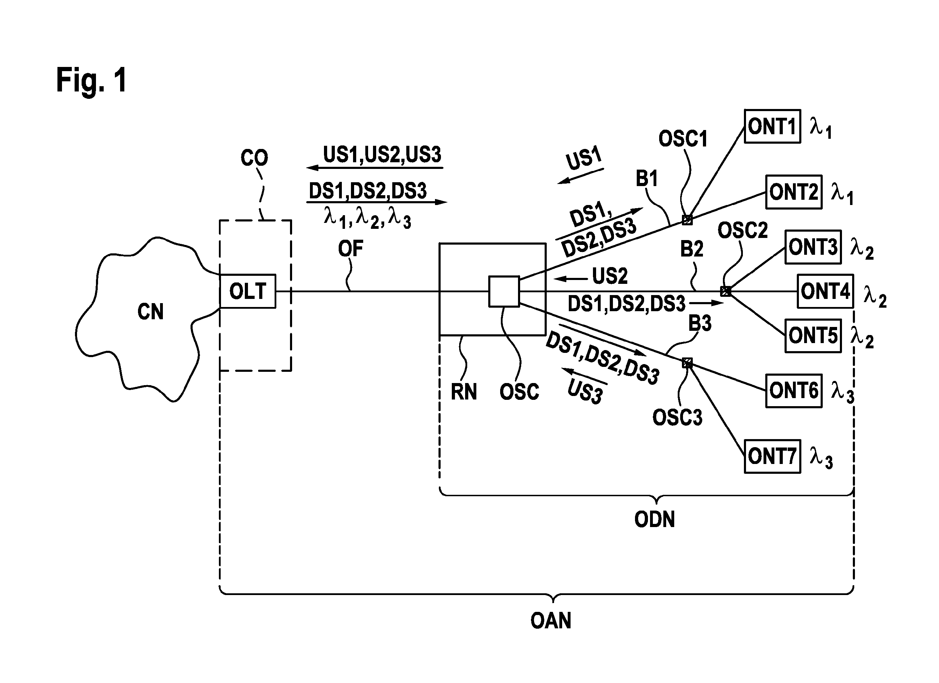

Figure 1 shows an optical access network OAN, which is connected at a central office CO via an optical line terminals (OLT) to a core network CN.

The OLT is connected via an optical feeder fibre OF to a remote note RN. Downstream signals DS1, DS2, DS3 are transmitted at respective wavelengths $\lambda_1$, $\lambda_2$, $\lambda_3$ to the remote note RN. The remote note RN contains an optical splitting unit OSC, which splits the power of the downstream signals DS1, DS2, DS3 onto branches B1, B2, B3 that are connected to the remote note RN. The splitting in the remote is preferably not wavelength dependent.

The branches B1, B2, B3 themselves may contain further splitting units OSC1, OSC2, OSC3 for furthermore splitting the downstream signals DS1, DS2, DS3. At the end of the optical branches B1, B2, B3, customer sided access network termination units ONT1, ..., ONT7 are connected, which are preferably optical network terminals (ONT) or optical network units (ONU). Distribution of the downstream signals DS1, DS2, DS3 is performed by the optical splitting unit OSC, by splitting the power of the downstream signals DS1, DS2, DS3. The optical splitting units OSC1, ..., OSC3 split the downstream signals DS1, DS2, DS3 also by means of power splitting.

In the example of an optical access network OAN shown in Figure 1, the optical network terminals ONT1, ONT 2 need to receive the data signal DS1, which carries data that is assigned to these optical network terminals ONT1, ONT2.

The optical network terminals ONT3,..., ONT5 need to receive the downstream signal DS2, which carries data that is assigned to these optical network terminals.

The optical network terminals ONT6, ONT7 need to receive the downstream signal DS3, which carries data that is assigned to these optical network terminals.

The optical network terminals ONT1, ..., ONT7 transmit upstream signals US1, US2, US3, that are combined by the optical splitting units OSC, OSC1, OSC2, OSC3 and then transmitted over the optical feeder fibre OF to the line terminal OLT.

Due to the fact, that the downstream signals DS1 DS2, DS3 are split by means of power splitting and not depended on wavelengths dependent splitting, each of the optical network terminals ONT1, ...,ONT7 receives all downstream signals DS1, DS2, DS3 with their respective wavelengths. For properly decoding data from one of the downstream signals DS1, DS2, DS3, an optical network terminal ONT1, ..., ONT7 needs to remove those downstream signals by means of filtering, which carry data signals that are not meant to be received and decoded at the respective optical network terminal.

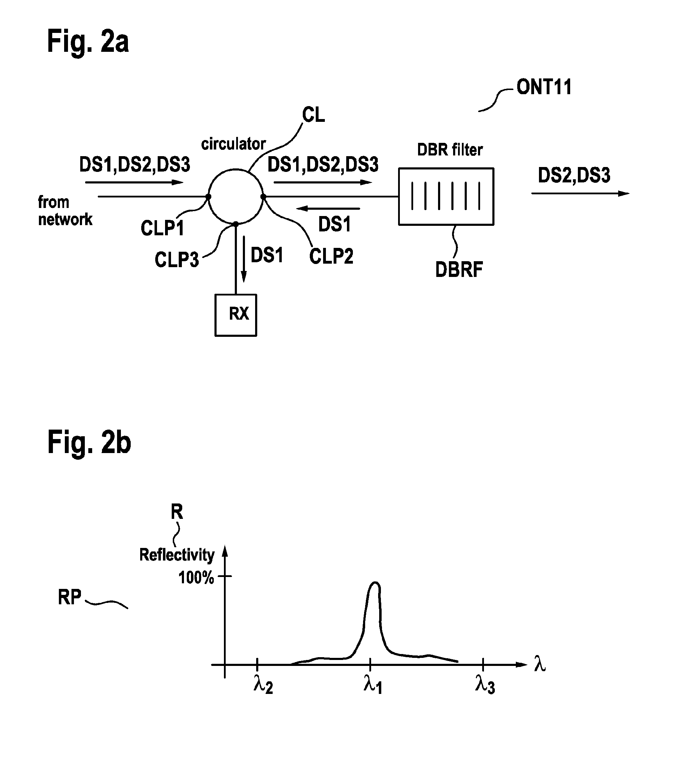

Figure 2a shows a solution for an optical network terminal ONT11 as known from the prior art.

The downstream signals DS1, DS2, DS3 are received from the network and provided to a circulating unit CL, that contains three ports CLP1, CLP2, CLP3.

Signals coming in at the port CLP1 leave the circulator at the port CLP2. Signals coming in at the circulator at the port CLP2 leave the circulator CL at the port CLP3. Thus, the downstream signals DS1, DS2, DS3 coming in at the port CLP1 leave the circulator CL at the port CLP2, from where they are provided to a distributed Bragg reflector DBRF.

The Bragg reflector DBRF consists of multiple sections of alternating refractive indices. Therefore, the Bragg reflector DBRF acts as an optical filter with a reflection profile as shown in Figure 2b.

Figure 2b shows an example of a reflection profile RP, wherein the reflectivity R is shown over the wavelength $\lambda$. In this example, the reflection profile RP is such, that the wavelength $\lambda_1$ is reflected essentially in total, while other wavelengths, such as for example the wavelengths $\lambda_2$ and $\lambda_3$ pass the Bragg reflector essentially without being reflected.

Coming back to Figure 2a, it is depicted that the signals DS2, DS3 of the wavelengths $\lambda_2$ and $\lambda_3$ pass the Bragg reflector DBRS, while the signal DS1 of the wavelength $\lambda_1$ is reflected back to the circulator CL and thus reaches the port CLP2. Therefore, the signal DS1 leaves the circulator CL at the port CLP 3 and is then transmitted to the receiving unit RX.

The solution according to the prior art shown in Figure 2a requires a circulator CL, which is an expensive solution and cannot be easily integrated into waveguide structures, e.g. silicon photonics such as a photonic integrated circuit. Such a solution is mentioned in the publication "Journal of the European optical society, Rapid Publications Nr. 2, 07029 (2007)".

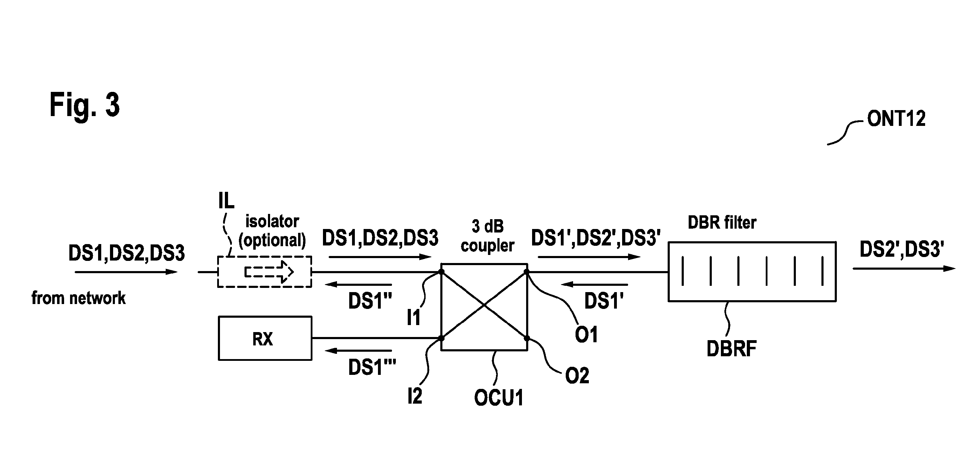

Figure 3 shows an alternative solution of an optical network terminal ONT12 according to the prior art. The signals DS1, DS2, DS3 are received from the network and then provided to an optical coupling unit OCU1. The optical coupling unit OCU1 is preferably a 1:1 power splitter.

The coupling unit OCU1 causes bi-directional coupling between at least two input ports I1, I2 and one or more output ports O1, O2. A signal coming in at one of the input ports I1, I2 is split by means of power splitting onto the output ports O1, O2. Furthermore, a signal coming in at one of the output ports O1, O2 is split by means of power splitting onto the input ports I1, I2. The power splitting of a signal is preferably performed by splitting the power into two equal resulting signals, such that the power is split in half, which means splitting by 3dB.

The signals DS1, DS2, DS3 reach the coupler OCU1 at the input port I1 and are then split onto the output ports O1, O2. Therefore, partial signals DS1', DS2', DS3' reach the DBR filter DBRF connected to the output port O1. The signals DS2', DS3' are not reflected back by the Bragg reflector DBRF.

The signal DS1' is reflected back onto the output port O1, from where it is split, which yields partial signals DS1", DS1''' at the respective ports I1, I2. The signal fraction DS1''' reaches the receiving unit RX, that is connected to the port 12. The signal fraction DS1" of the signal DS1 is transmitted from the port I1 towards the network.

Since it is not desired to transmit the signal fraction DS1" back into the network, an isolator IL is needed in order to prevent the signal fraction DS1" from propagating back into the network. This has the disadvantage, that an expensive isolator IL is needed, which can not be integrated easily into a photonic integrated circuit. Furthermore, this has also the disadvantage, that fractions of the signal DS1 coming in at the port I1 and then being split on to the port 12 are not used at the receiver RX for decoding data from fractions of the signal DS1, which leads to a reduced intensity of the signal DS1 at the receiver RX.

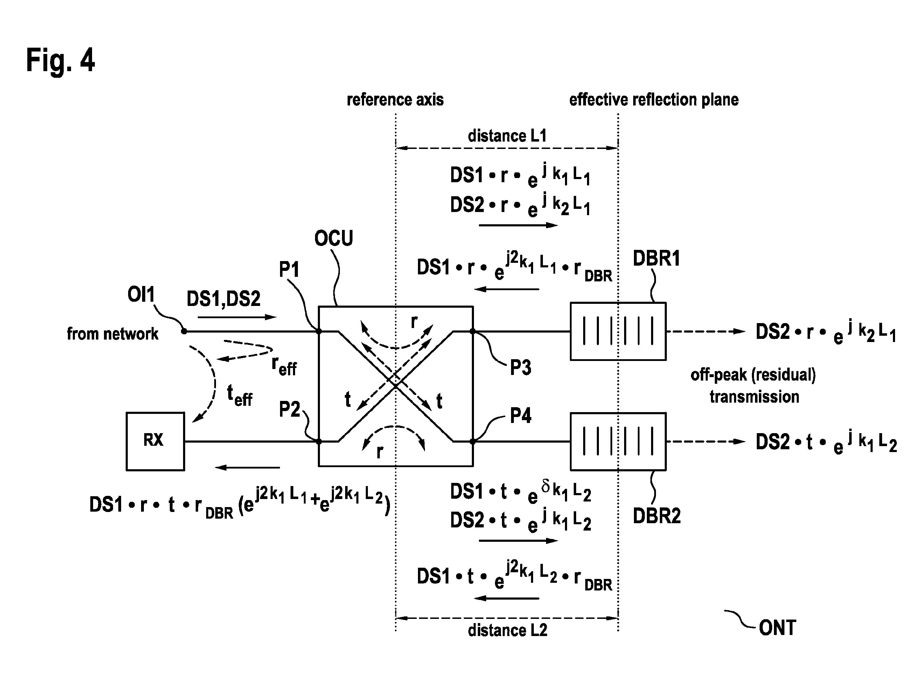

Figure 4 shows an embodiment of a proposed optical network terminal ONT. The optical network terminal OUT contains an optical interface OI1, via which signals are received from the optical access network. According to Figure 4, signals DS1, DS2 are received from the network. For reasons of simplicity, the functioning of the optical network terminal OUT is explained only with regard to the two signals DS1, DS2 without in detail explaining a behaviour of the optical network terminal OUT with respect to a signal DS3 that was previously mentioned in Figure 1, Figure 2 and Figure 3.

An optical coupling unit OCU contains ports P1, P2, P3, P4. The optical interface OI1 is connected to the port P1. The port P2 is connected to a receiving unit RX. The port P3 is connected to a distributed Bragg reflector DBR1. To the port P4, a further distributed Bragg reflector DBR2 is connected. The Bragg reflectors DBR1, DBR2 have both reflection profiles, according to which the Bragg reflectors DBR1, DBR2 essentially reflect the signal DS1 with a $\lambda_1$, while the signal DS2 with the wavelength $\lambda_2$ passes the Bragg reflectors DBR1, DBR2 essentially without reflection.

The optical coupling unit OCU is such, that a signal reaching the port P1 is split by means of power splitting essentially equally onto the ports P3 and P4. Furthermore, the transfer of a signal from the port P1 to the port P3 can be described by a reflection coefficient r, while a transmission of a signal from the port P1 to the port P4 can be described by a transmission coefficient t. Furthermore, the transmission coefficients r and t have a relationship to each other, such that signal fractions leaving the coupler OCU at the ports P3 and P4 have a relationship to each other with a phase shift of 90 degrees to each other. In detail, a relationship between the coefficients r and t is given by $t = r \cdot e^{+j\pi/2}$.

The coupler OCU is a symmetric coupler, in the sense, that properties explained with regard to a signal coming to the port P1 and leaving as signal fractions at the port P3 and P4 are valid equivalently for signals coming in at the port P2 and then leaving the coupler OCU at the ports P4 and P3, respectively, as indicated in Figure 4. Equal considerations hold for signals coming in at the ports P3 or P4 and leaving the coupler OCU as signal fractions at the ports P1 and P2. This can be seen in detail from the illustration of the coupler OCU in Figure 4.

The Bragg reflector DBR1 is placed in a distance to the optical coupling unit, such that the effective reflection plane of the Bragg reflector DBR1 has an effective optical distance L1 to the reference axis of the coupler OCU. Furthermore, the Bragg reflector DBR2 is placed, such that the effective reflection plane of the Bragg reflector DBR2 has an effective optical distance L2 to the references axis of the optical coupler OC.

The distance L2 is chosen as the distance L1 plus or minus an integer multiple of the wavelength $\lambda_1$ of the signal DS1. In detail, the relationship between the distance L2 and the distance L1 is chosen as

$$L2 = L1 + n \cdot \lambda_1, \quad n \in IN .$$

Preferably, the facto n is chosen to n=0. In this case, the effective optical distances L1 and L2 are chosen to be equal.

The effect of the choice of the distances L1 and L2 will be now described in detail, by deriving the signal fractions present at each of the different points within the optical network terminal.

The signal DS1 coming in at the port P1 is split into a signal fraction leaving the port P3 and then reaching the reflector DBR1. When reaching the reflector DBR1, the signal fraction can be described as

$$DS1 \cdot r \cdot e^{jk_1 L_1} ,$$

wherein k1 is the angular wave number given by

$$k_1 = \frac{2\pi}{\lambda_1} .$$

Furthermore, the signal fraction of the signal DS2 transmitted from the port P1 to the port P3 and then reaching the reflector DBR1 is given by

$$DS2 \bullet r \bullet e^{jk_2L_1} \, ,$$

wherein k2 is the angular wave number given by

$$k_2 = \frac{2\pi}{\lambda_2}.$$

The signal fraction caused by the signal DS2 is transmitted by the reflector DBR1 and thus leaves the reflector DBR1 essentially without being reflected. In contrast to this, the signal fraction of the signal DS1 reaching the Bragg reflector DBR1 is essentially reflected back towards the port P3, at which this signal fraction can be described by

$$DS1 \bullet r \bullet e^{j2k_1L_1} \bullet r_{DBR} \, ,$$

wherein the coefficient r_DBR is the reflection coefficient of the reflector DBR1 for the wavelength $\lambda_1$.
The signals DS1 and DS2 coming in at the port P1 cause signal fractions that are transmitted from the port P4 towards the reflector DBR2. The signal fraction of the signal DS1 reaching the reflector DBR 2 can be described by

$$DS1 \bullet t \bullet e^{jk_1L_2}.$$

Furthermore, the fraction caused by the signal DS2 at the port P4 and then reaching the reflector DBR2 can be described by

$$DS2 \bullet t \bullet e^{jk_2L_2}.$$

This signal fraction of the signal DS2 leaves the Bragg reflector DBR2 essentially without being reflected. In contrast to this, the signal fraction caused by the signal DS1 is essentially reflected back by the Bragg reflector towards the port P4, which can be described by

$$DS1 \bullet t \bullet e^{j2k_1L_2} \bullet r_{DBR}$$

when reaching the port P4.
The resulting signals, present at the port P1 and P2, can be described by furthermore applying the concept of power splitting and applying the transmission coefficients r and t respectively to the signals or signal fractions of the signal DS1 coming in at the ports P3 and P4.
The resulting signal at the port P2 can be described by

$$DS1 \bullet r \bullet t \bullet r_{DBR} \left( e^{j2k_1L_1} + e^{j2k_1L_2} \right).$$

The signal at the port P1 can be described by

$$DS1 \cdot t^2 \cdot r_{DBR} \cdot e^{j2k_1L_2} + DS1 \cdot r^2 \cdot r_{DBR} \cdot e^{j2k_1L_1}.$$

It will now be described, in which way the configuration of the devices within the optical network terminal OUT leads to an effective signal and an effective transmission coefficient t_eff of the signal DS1 with the wavelength $\lambda_1$ reaching the receiver RX.

Coming from the resulting signal at the port P2

$$DS1 \cdot r \cdot t \cdot r_{DBR} \left( e^{j2k_1L_1} + e^{j2k_1L_2} \right),$$

the last multiplication term

$$e^{j2 \bullet k_1 L_1} + e^{j2 \bullet k_1 L_2}$$

will now be examined in more detail.

Using

$$e^{j2 \bullet k_1 L_2}$$
$$= e^{j2 \bullet k_1 \left( L_1 + n \bullet \lambda_1 \right)}$$
$$= e^{j2 \bullet k_1 L_1} \cdot e^{j2 \bullet k_1 n \bullet \lambda_1}$$
$$= e^{j2 \bullet k_1 L_1} \cdot e^{j2 \bullet \frac{2\pi \bullet n \bullet \lambda_1}{\lambda_1}}$$
$$= e^{j2 \bullet k_1 L_1} \cdot e^{jn \bullet 4\pi}$$

we derive the last multiplication term to

$$e^{j2 \bullet k_1 L_1} + e^{j2 \bullet k_1 L_2} = e^{j2 \bullet k_1 L_1} \cdot \left( 1 + e^{jn4\pi} \right) = e^{j2 \bullet k_1 L_1} \cdot 2.$$

Thus, the signal at the port P2 can be rewritten as

$$2 \cdot DS1 \cdot r \cdot t \cdot r_{DBR} \cdot e^{j2 \bullet k_1 L_1}.$$

This yields an effective transmission coefficient t_eff for the signal DS1 from the optical interface OI1 to the receiver RX as

$$t_{eff} = 2 \cdot r \cdot t \cdot r_{DBR} \cdot e^{j2 \cdot k_1 L_1}.$$

The respective intensity coefficient T_eff is then given by

$$T_{eff} = \left| t_{eff} \right|^2 = 4 \cdot \left| r \right|^2 \cdot \left| t \right|^2 \cdot \left| r_{DBR} \right|^2 \cdot 1 \quad.$$

For a lossless symmetric coupling unit OCU with ideal coefficients $|r|^2 = 1/2$ and $|t|^2 = 1/2$ as well as ideal Bragg reflectors DBR1, DBR2 with $|r_{DBR}| = 1$ for the wavelength $\lambda_1$, the intensity reflection coefficient becomes

$$T_{eff} \rightarrow 1.$$

Therefore, when choosing the effective optical distances L2 and L1, such that the effective optical distance L2 is equal to L1 plus or minus an integer multiple of the wavelength $\lambda_1$, this leads to an effective intensity of a signal reaching the receiver RX, that is essentially equal to the signal intensity of the signal DS1 itself. Also in the special case, that the effective optical distances L2 and L1 are chosen to be equal, this leads to an effective intensity of a signal reaching the receiver RX, that is essentially equal to the signal intensity of the signal DS1 itself.

It will now be examined in detail, in which way the choice of the distances L1 and L2 leads to a signal fraction caused by the signal DS1, that vanishes at the port P1.

The signal fraction caused by the signal DS1 present at the port P1 is given by

$$DS1 \cdot t^2 \cdot r_{DBR} \cdot e^{j2k_1L_2} + DS1 \cdot r^2 \cdot r_{DBR} \cdot e^{j2k_1L_1}$$
$$= DS1 \cdot r_{DBR} \cdot ( t^2 \bullet e^{j2k_1L_2} + r^2 \bullet e^{j2k_1L_1} ) \quad.$$

The last multiplication term in the brackets can be rewritten by using the result from above

$$e^{j2 \cdot k_1 L_2} = e^{j2 \cdot k_1 L_1} \cdot e^{jn \bullet 4\pi}$$

in order to to yield

$$r^2 \cdot e^{j2 \cdot k_1 L_1} + t^2 \cdot e^{j2 \cdot k_1 L_1} \cdot e^{jn4\pi}.$$

Keeping in mind that $n \in N$ and $t = r \cdot e^{+j\pi/2}$, this leads to

$$\left(r^2 + t^2\right) \cdot e^{j2 \bullet k_1 L_1}$$
$$= \left(r^2 + r^2 \cdot e^{j\pi}\right) \cdot e^{j2 \bullet k_1 L_1}$$
$$= r^2 \cdot e^{j2 \bullet k_1 L_1} \cdot \left(1 + e^{j\pi}\right)$$

Due to the relationship

$$e^{j\pi} = -1 \quad ,$$

the multiplication in the bracket term deminishes to

$$r^2 \cdot e^{j2 \bullet k_1 L_1} \cdot \left(1 + e^{j\pi}\right) = 0 \quad .$$

Thus, for the signal DS1 with the wavelength $\lambda_1$, the reflection coefficient r_eff from the optical interface OI1 back to the optical interface OIF is equal to zero. Therefore, the signal fraction caused at the port P1 by the signal DS1 vanishes. Therefore, it is not necessary to foresee an isolator at an interconnection between the optical interface OI1 and the network, in order to prevent any signal fractions of the signal DS1 from leaving the optical network terminal ONT. This is achieved, by choosing the effective optical distances L2 and L1, such that the effective optical distance L2 is equal to L1 plus or minus an integer multiple of the wavelength $\lambda_1$. This is also achieved in the special case, that the effective optical distances L2 and L1 are chosen to be equal.

To summarize the above, in the case that the effective optical distances L2 and L1 are chosen as different effective optical distances, the tuning of the ONT to the wavelength $\lambda_1$ is achieved, by choosing the effective optical distance L2 to be equal to L1 plus or minus an integer multiple of the wavelength $\lambda_1$ and by the reflection properties of the Bragg reflectors DBR1, DBR2. In the case, that the effective optical distances L2 and L1 are chosen to be equal, the tuning of the ONT to the wavelength $\lambda_1$ is achieved independently of the choice for L2 and L1, but by the reflection properties of the Bragg reflectors DBR1, DBR2.

Aspects of deviations of different parameters are now discussed in detail.

In the case, that the optical coupler has a transmission coefficient $|r|^2 = 0.48$ and a transmission coefficient $|t|^2 = 0.52$ , then this leads to a reduction of the overall effective transmission coefficient of

$$T_{eff}\big|_{dB} = r_{DBR}\big|_{dB} - 0.007 dB \; .$$

In the case, that the optical coupler has a transmission coefficient $|r|^2 = 0.47$ and a transmission coefficient $|t|^2 = 0.47$ , then this leads to a reduction of the overall effective transmission coefficient of

$$T_{eff}\big|_{dB} = r_{DBR}\big|_{dB} - 0.6 dB \; .$$

In the case, that the distances L1 and L2 are not exactly equal or an integer multiple of the wavelength $\lambda_1$, then an additional deviation by $\Delta L = 0.1 \cdot \lambda_1$ leads to an overall effective transmission coefficient of

$$T_{eff}\big|_{dB} = r_{DBR}\big|_{dB} - 0.9dB .$$

In the case, that the reflection coefficients for both Bragg reflectors are not exactly $|r_{DBR}|^2 = 1$ but $|r_{DBR}|^2 = 0.95$ , then this leads to an overall effective transmission coefficient of

$$T_{eff}\big|_{dB} = r_{DBR}\big|_{dB} - 0.1dB .$$

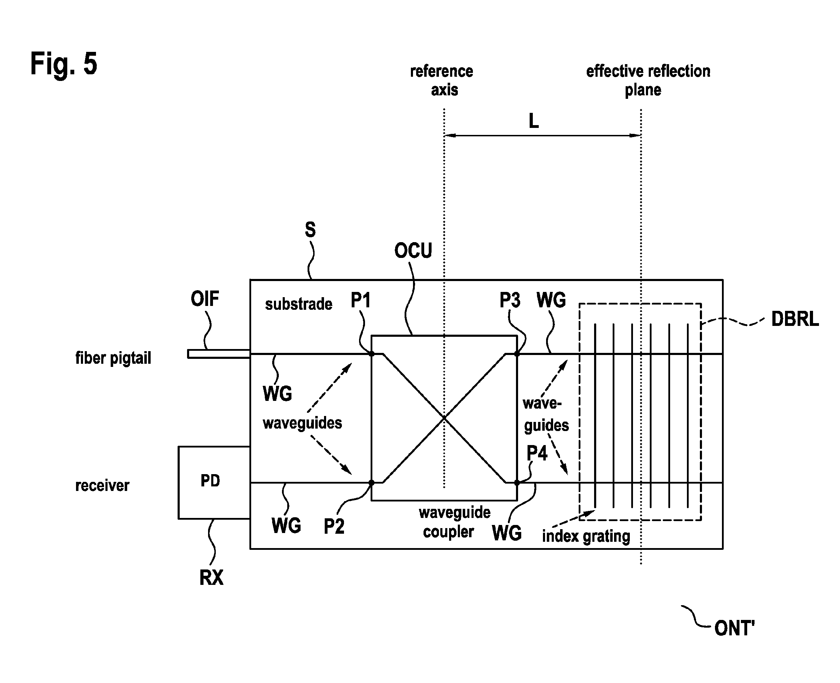

Figure 5 shows a preferred embodiment of a proposed optical network terminal ONT'.

An optical interface OIF is given as a fibre pigtail. The fibre pigtail is connected to different devices integrated on a photonic integrated circuit. A waveguide WG connects the fibre pigtail on the substrate to the port P1 of the optical coupler OCU. Furthermore, a waveguide WG connects the port P2 of the coupler OCU to a receiver RX that is connected to the substrate. The receiver RX is preferably a photo diode PD.

The ports P3 and P4 are connected by respective waveguides WG to a combined distributed Bragg reflector DBRC. The combined Bragg reflector DBRC is preferably an index grating.

The effective optical distance L between the effective reflection plane of the Bragg reflector DBRC to the reference axis of the coupling unit OCU is chosen to L=L2=L1, as previously outlined in detail with regard to Figure 4.

The advantage of the proposed solution shown in Figure 5 is, that since not two different Bragg reflectors are used but only one combined Bragg reflector DBRC, the negative effect of deviations of the distances L2 and L1 between the effective reflection planes of different Bragg reflectors and the reference axis of the optical coupler OCU are reduced.

Preferably, a heating element, not shown in Figure 5, is placed, such that thermal energy generated by this heating element affects the Bragg reflector DBRC, which changes its refractive indices and therefore also the wavelength, for which the reflection profile of the Bragg reflector DBRC has its peak. Thus, by using the heating element, the Bragg reflector DBRC and also in total the customer sided termination unit ONT' are tuned to the wavelength that shall be received at the receiver RX.

The coupler OCU and the Bragg reflector DBRC are preferably provided in a III-V-semiconductor material, or alternatively based on silicon as a silicon photonic device.

By injecting an electrical current in the area of the Bragg reflector DBRC, the physical charge carrier density is affected and thus also the wavelength for which the reflection profile of the Bragg reflector DBRC has its peak. Thus, by injecting an electrical current in the area of the Bragg reflector DBRC, the customer sided termination unit ONT' is tuned to the wavelength that shall be received at the receiver RX.

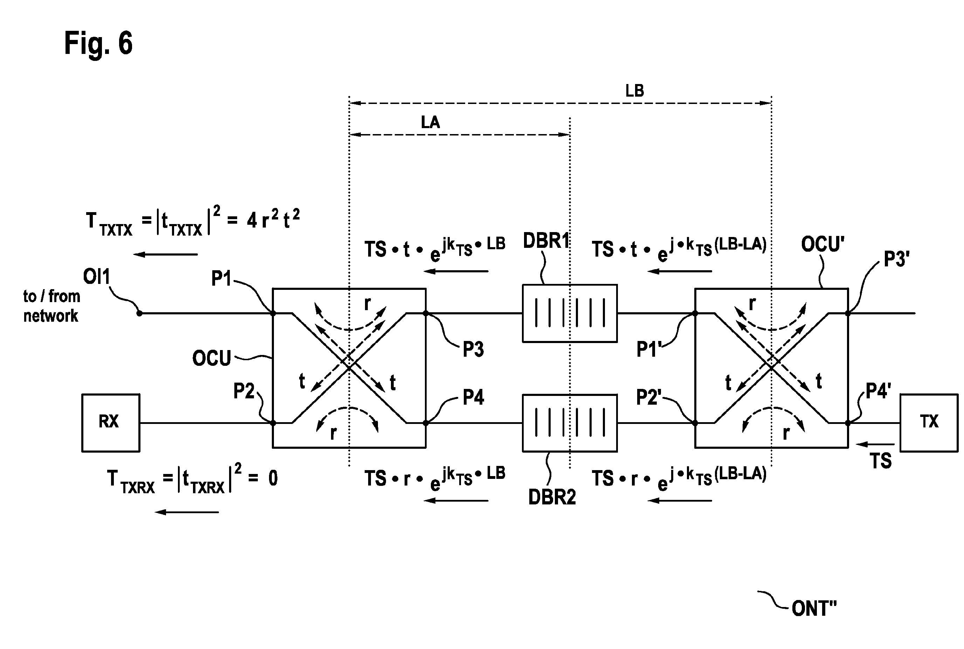

Figure 6 shows a further embodiment of an optical network terminal ONT".

The termination unit ONT" contains the same elements OI1, RX, OCU, DBR1, DBR2, as the termination unit ONT previously described according to Figure 4.

Furthermore, the effective optical distance LA between the effective reflection planes of the Bragg reflectors DBR1, DBR2 to the reference axis of the coupler OCU is chosen to a same value. In detail, both Bragg reflectors DBR1, DBR2 have the same distance LA to the coupler OCU.

The Bragg reflectors DBR1, DBR2 are furthermore connected to input ports P1', P2' of an optical coupler OCU'. The coupler OCU' is identical to the coupler OCU of Figure 4.

The port P4' of the coupler OCU' is connected to a transmission unit TX that transmits a transmission signal TS at the wavelength $\lambda_{TS}$ towards the port P4'. The distance between the effective reflection plane of the coupler OCU' to the effective reflection plane of the coupler OCU is the distance LB, which is chosen, such that this distance LB is equal for the upper branch, including the reflector DBR1, as well as the for the lower branch, including the reflector DBR2.

The signal TS coming in at the port P4' is split by the coupler OCU' into a signal fraction reaching the reflector DBR1 that can be described by

$$TS \cdot t \cdot e^{j \cdot k_{TS}(LB-LA)} .$$

Furthermore, the signal TS is split by the coupler OCU' into a signal fraction reaching the reflector DBR2, which can be described as the signal fraction

$$TS \bullet r \bullet e^{j \bullet k_{TS}(LB-LA)}.$$

Herein,

$$k_{TS} = \frac{2\pi}{\lambda_{TS}}$$

is the angular wave number.
The signal fractions of the signal TS reaching the Bragg reflectors DBR1 and DBR2 pass these reflectors essentially without being reflected.
The signal fraction present at the port P3 of the coupler OCU 1 can be derived as

$$TS \bullet t \bullet e^{jk_{TS} \bullet LB}.$$

The signal fraction reaching the port P4 coupler OCU can be derived as

$$TS \bullet r \bullet e^{jk_{TS} \bullet LB}.$$

Therefore, the resulting signal caused by the signal TS at the port P2 finally reaching the receiver RX can be written as

$$TS \bullet t^2 \bullet e^{jk_{TS} \bullet LB} + TS \bullet r^2 \bullet e^{jk_{TS} \bullet LB}.$$

This can be rewritten as

$$TS \bullet e^{jk_{TS} \bullet LB} \bullet \left( r^2 + t^2 \right).$$

Therefore, the transmission coefficient t_TXRX from the transmitter TX towards the receiver RX is given by

$$t_{TXRX} = e^{jk_{TS} \bullet LB} \bullet \left( r^2 + t^2 \right).$$

Thus, the intensity transmission coefficient T_TXRX is given by

$$T_{TXRX} = \left| t_{TXRX} \right|^2 = 0$$

due to the relationship of

$$t = r \cdot e^{+j\pi/2} \quad .$$

Same considerations are valid for the choice of

$$t = r \cdot e^{-j\pi/2}$$

Thus, the choice of the distances LA and LB as described above has the advantage, that signal fractions of the signal TS present at the port P2 and thus reaching the reflector RX vanish, which is an advantage since the transmission signal TS should not reach the receiver RX.

The resulting signal fraction caused by the signal TS at the port P1 can be written as

$$2 \cdot TS \cdot r \cdot t \cdot e^{jk_{TS} \cdot LB} \quad .$$

Thus, the effective transmission coefficient from the transmitter TX towards the optical interface OI1 connected to the port P1 is given by

$$t_{TSRX} = 2 \cdot r \cdot t \cdot e^{jk_{TS} \cdot LB} \quad .$$

Therefore, the optical intensity transmission coefficient T_TXTX is given by

$$T_{TXTX} = \left| t_{TXTX} \right|^2 = 4 \left| r \right|^2 \left| t \right|^2 .$$

For ideal coefficients $|r|^2 = 1/2$ and $|t|^2 = 1/2$ this optical intensity transmission coefficient T_TXTX is equal to 1 for a lossless symmetric coupler and ideal Bragg reflectors DBR1, DBR2 which transmit the signal TS essentially without any reflection or attenuation.

Thus, the choice of the distances LB and LA as described above has the advantage, that the optical intensity of the signal fraction leaving the termination unit OUT" at the optical interface OI1 is identical to the optical intensity of the transmission signal TS.

Preferably, the device ONT" shown in Figure 6 is modified, such that the second optical coupler OCU' is removed, and such that the transmitter TX is connected directly to one of the Bragg reflectors DBR1, DBR2 on the right hand side.

Furthermore, the first optical coupler is modified, such that it has a mode of operation for a wavelength of an incoming downstream signal as previously described, while, when the transmitter TX is connected directly to the Bragg reflector DBR1, it has a mode of operation for the wavelength of the transmitted upstream signal TS such that the reflection coefficient for this upstream wavelength is $|r|^2 = 1$ while the transmission coefficient for this upstream wavelength is $|t|^2 = 0$ .

Alternatively, the first optical coupler is modified, such that it has a mode of operation for a wavelength of an incoming downstream signal as previously described, while, when the transmitter TX is connected directly to the Bragg reflector DBR2, it has a mode of operation for the wavelength of the transmitted upstream signal TS such that the reflection coefficient for this upstream wavelength is $|r|^2 = 0$ while the transmission coefficient for this upstream wavelength is $|t|^2 = 1$.

This ensures, that the transmission signal TS is transmitted in full intensity to the optical interface OI1 while at the same time the transmission signal TS is not transmitted to the receiver RX.

The Bragg reflectors DBR1, DBR2 of the Figures 4 and 6 are preferably realized as a combined distributed Bragg reflector, as it has been described previously with regard to Figure 5. Furthermore, the optical couplers and the Bragg reflectors shown in the Figures 4 and 6 are preferably realized as a photonic integrated circuit, as it has been described with regard to Figure 5. Preferably, the optical couplers and the Bragg reflectors shown in the Figures 4 and 6 are preferably realized as a photonic integrated circuit including a heating element, as it has been described with regard to Figure 5.

**Claims**

1. Customer sided termination unit (ONT, ONT', ONT") for an optical access network, comprising

    - an optical interface (OIF, OI1) adapted to receive a downstream signal (DS1) having a wavelength ($\lambda_1$),
    - an optical receiver (RX),
    - a first and a second distributed Bragg reflector (DBR1, DBR2, DBRC), essentially reflecting a signal at said wavelength ($\lambda_1$), and
    - a symmetric optical coupler (OCU) with at least two first ports ($P_1$, P2) at a first side and at least two second ports (P3, P4) at a second side,

    wherein

    - said optical interface is connected to one (P1) of said first ports (P1, P2),
    - said optical receiver is connected to the other (P2) of said first ports (P1, P2)
    - and said distributed Bragg reflectors (DBR1, DBR2, DBRC) are connected to respective of said second ports (P3, P4),

    and wherein

    - an effective optical distance (L1) between an effective reflection plane of said first distributed Bragg reflector (DBR1, DBRC) and a reference axis of said symmetric optical coupler (OCU)
    - and an effective optical distance (L2) between an effective reflection plane of said second distributed Bragg reflector (DBR2, DBRC) and a reference axis of said symmetric optical coupler (OCU)

    are chosen such, that a difference between said effective optical distances is chosen as an integer multiple of said wavelength ($\lambda_1$).

2. Customer sided termination unit (ONT, ONT', ONT") according to claim 1, wherein said effective optical distances (L1, L2) are chosen to a same value.

3. Customer sided termination unit (ONT, ONT', ONT") according to claim 1, wherein said symmetric optical coupler (OCU) causes a phase shift of $\pi/2$ between signals leaving said coupler at said first ports or said second ports.

4. Customer sided termination unit (ONT, ONT', ONT") according to claim 1, wherein said distributed Bragg reflectors (DBR1, DBR2) are provided as one combined Bragg reflector (DBRC).

5. Customer sided termination unit (ONT, ONT', ONT") according to claim 1, wherein said distributed Bragg reflectors (DBR1, DBR2, DBRC) are provided as index gratings.

6. Customer sided termination unit (ONT, ONT', ONT") according to claim 1, wherein said coupler (OCU) and said distributed Bragg reflectors (DBRC) are provided as a photonic integrated circuit (S).

7. Customer sided termination unit (ONT, ONT', ONT") according to claim 1, wherein said receiver contains a photo diode.

8. Customer sided termination unit (ONT, ONT', ONT") according to claim 1,
   wherein said symmetric optical coupler (OCU) is a first symmetric optical coupler (OCU),
   wherein said customer sided termination unit (ONT, ONT', ONT") comprises furthermore a second symmetric optical coupler (OCU'), comprising ports on one side connected to said distributed Bragg reflectors (DBR1, DBR2, DBRC) and a port at another side connected to a transmitter (TX),
   wherein an effective optical distance between said reference axis of said first symmetric optical coupler (OCU) and a reference axis of said second symmetric optical coupler (OCU') is chosen to an equal value for all ports (P1', P3, P2', P4) of said couplers (OCU, OCU') that are connected to each other.

9. Customer sided termination unit (ONT, ONT', ONT") according to claim 1, wherein said customer sided termination unit (ONT, ONT', ONT") is an optical network terminal (ONT).

10. Customer sided termination unit (ONT, ONT', ONT") according to claim 1, wherein said customer sided termination unit (ONT, ONT', ONT") is an optical network unit (ONU).

**Fig. 1**

EP 2 608 435 A1

## Fig. 2a

ONT11

CL

circulator

DS1,DS2,DS3 → DS1,DS2,DS3 →

DBR filter

DS2,DS3 →

from network

CLP1

CLP3

↓ DS1

← DS1

CLP2

DBRF

RX

## Fig. 2b

R

Reflectivity

RP

100%

$\lambda_2$    $\lambda_1$    $\lambda_3$    $\lambda$

**Fig. 3**

EP 2 608 435 A1

# Fig. 4

EP 2 608 435 A1

# Fig. 5

# Fig. 6

$T_{TXTX} = |t_{TXTX}|^2 = 4r^2t^2$

$TS \cdot t \cdot e^{jk_{TS} \cdot LB}$

$TS \cdot t \cdot e^{j \cdot k_{TS}(LB-LA)}$

$T_{TXRX} = |t_{TXRX}|^2 = 0$

$TS \cdot r \cdot e^{jk_{TS} \cdot LB}$

$TS \cdot r \cdot e^{j \cdot k_{TS}(LB-LA)}$

LB

LA

OI1  P1

OCU

P2

RX

r

t        t

r

P3

P4

DBR1

DBR2

OCU'  P3'

P1'

r

t      t

r

P2'

TS

P4'

TX

to / from
network

ONT"

EP 2 608 435 A1

Europäisches
Patentamt

European
Patent Office

Office européen
des brevets

# EUROPEAN SEARCH REPORT

Application Number

EP 11 30 6704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 061 481 A (HEIDRICH HELMUT [DE] ET AL) 9 May 2000 (2000-05-09)<br>* column 1, line 6 - line 15 *<br>* column 2, line 53 - line 64 *<br>* column 3, line 25 - line 48 *<br>* column 4, line 9 - column 5, line 34 *<br>* column 7, line 9 - column 8, line 58 *<br>* column 10, line 50 - column 11, line 67 *<br><br>* figure 1 * | 1-10 | INV.<br>H04J14/02<br>G02B6/293 |
| T | Shyam: "Fused Fiber Couplers: Basic Theory and Automated Fabrication",<br>,<br>26 February 2011 (2011-02-26), pages 25-54, XP002676815,<br>Retrieved from the Internet:<br>URL:http://shodhganga.inflibnet.ac.in/bitstream/10603/1512/9/09_chapter%202.pdf<br>[retrieved on 2012-05-29]<br>* 2.1 Theory: 2x2 Waveguide Directional Coupler * | 1-10 | |
| A | US 2004/264975 A1 (KOO JUN-MO [KR] ET AL) 30 December 2004 (2004-12-30)<br>* page 3, paragraphs 40, 41, 45, 46 *<br>* page 4, paragraphs 49, 52 - paragraph 53 *<br>* page 5, paragraph 68 *<br>* figure 11 * | 1-10 | TECHNICAL FIELDS SEARCHED (IPC)<br><br>H04J<br>G02B |

-/--

The present search report has been drawn up for all claims

| Place of search | Date of completion of the search | Examiner |
|---|---|---|
| Munich | 30 May 2012 | Carballo da Costa, E |

Europäisches
Patentamt

European
Patent Office

Office européen
des brevets

# EUROPEAN SEARCH REPORT

Application Number

EP 11 30 6704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 02/079834 A2 (BOOKHAM TECHNOLOGY PLC [GB]; ONISCHENKO ALEXANDER IVANOVICH [GB]; PECH) 10 October 2002 (2002-10-10) <br> * page 1, line 3 - line 5 * <br> * page 3, line 16 - line 19 * <br> * page 4, line 20 - line 26 * <br> * page 5, line 31 - page 6, line 5 * <br> * page 7, line 13 - page 10, line 2 * <br> * page 12, line 30 - page 13, line 18 * <br> * figure 4 * <br> ----- | 1-10 | |
| A | WO 01/22046 A1 (OPTOPLAN AS [NO]; THINGBOE DAG [NO]; KRINGLEBOTN JON THOMAS [NO]) 29 March 2001 (2001-03-29) <br> * page 4, line 22 - line 34 * <br> * page 7, line 18 - page 8, line 29 * <br> * page 9, line 39 - page 10, line 26 * <br> * figures 1,4 * <br> ----- | 1-10 | |
| | | | TECHNICAL FIELDS SEARCHED (IPC) |

The present search report has been drawn up for all claims

| Place of search | Date of completion of the search | Examiner |
|---|---|---|
| Munich | 30 May 2012 | Carballo da Costa, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 11 30 6704

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2012

| Patent document cited in search report | | Publication date | Patent family member(s) | | | Publication date |
|---|---|---|---|---|---|---|
| US 6061481 | A | 09-05-2000 | AT | 223068 | T | 15-09-2002 |
| | | | CA | 2225135 | A1 | 03-01-1997 |
| | | | DE | 19522591 | A1 | 02-01-1997 |
| | | | EP | 0834095 | A1 | 08-04-1998 |
| | | | JP | H11507738 | A | 06-07-1999 |
| | | | US | 6061481 | A | 09-05-2000 |
| | | | WO | 9700460 | A1 | 03-01-1997 |
| US 2004264975 | A1 | 30-12-2004 | CN | 1573385 | A | 02-02-2005 |
| | | | JP | 2005018072 | A | 20-01-2005 |
| | | | KR | 20050000708 | A | 06-01-2005 |
| | | | US | 2004264975 | A1 | 30-12-2004 |
| WO 02079834 | A2 | 10-10-2002 | AU | 2002249369 | A1 | 15-10-2002 |
| | | | WO | 02079834 | A2 | 10-10-2002 |
| WO 0122046 | A1 | 29-03-2001 | AU | 6881000 | A | 24-04-2001 |
| | | | EP | 1218710 | A1 | 03-07-2002 |
| | | | NO | 994473 | A | 16-03-2001 |
| | | | US | 6680472 | B1 | 20-01-2004 |
| | | | WO | 0122046 | A1 | 29-03-2001 |

EPO FORM P0459

For more details about this annex : see Official Journal of the European Patent Office, No. 12/82

## EP 2 608 435 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Journal of the European optical society. Rapid Publications, 2007, 07029